# EUROPEAN PATENT APPLICATION

(11) **EP 3 584 051 A1**
(43) Date of publication of application: **25.12.2019**
(21) Application number: 19154748.8
(22) Date of filing: 31.01.2019
(51) Int. Cl.: B28D 1/12, B28D 1/04, B24B 27/06, B24D 5/02, B24D 7/02, B23B 51/04

(54) **CUTTING ACCESSORIES FOR POWER TOOLS**

(30) Priority: 07.02.2018 GB 201801947
(71) Applicant: C4 Carbides Limited, Cambridge CB4 1TF (GB)
(72) Inventor: DUGGAN, Paul, Cambridge, Cambridgeshire CB4 1FT (GB); RANJAN, Amit, Cambridge, Cambridgeshire CB4 1TF (GB)
(74) Representative: Forsyth, Helen Jane

(57) **Abstract**

There is provided a cutting accessory (10) for a power tool comprising a body (12) bearing a cutting surface (18), wherein the body (12) comprises a plurality of spaced apart regions (26) of reduced thickness within the cutting surface (18) to create at least one interrupted cutting surface overlying a second cutting surface. Abrasive cutting material (21) is affixed to the cutting surface(18). The regions of reduced thickness (26) are equispaced along the cutting surface (18). The body can be substantially tubular (12) or a linear edge blade (41).

## Description

### Field of the Invention

The present invention relates to cutting accessories, such as drill bits and blades used with power tools.

### Background to the Invention

For power tools used for cutting, grinding and drilling, cutting accessories such as blades and drill bits need to have as long a life as possible. Different abrasive cutting surfaces can be applied to the cutting accessories and techniques such as wax cooling incorporated into annular drill bits to improve operational life of the cutting accessory. Different types of cutting edge can be used and the spacing and type of teeth varied within a blade and drill bits.

### Summary of the Invention

In accordance with the present invention, there is provided a cutting accessory for a power tool comprising a body, such as a blade or drill bit, bearing a cutting surface, wherein the body comprises a plurality of spaced apart regions of reduced thickness to create within the cutting surface at least one interrupted cutting surface overlying a second cutting surface. The interrupted cutting surface extends laterally beyond the second cutting surface, the interrupted cutting surface contacting a work surface when drilling or cutting commences, and the second cutting surface operative after the interrupted cutting surface has been worn down.

The cutting surface may be continuous and so without any cut-away portions or teeth, or may be interrupted such as by providing cut-away portions such as gullets.

The cutting surface may be formed with regions of reduced height, preferably overlying the regions of reduced thickness.

The cutting accessory may be a linear edge blade or a band saw blade, or a circular disc, or may be in the form of a drill bit, such as a circular drill bit or an annular drill bit, such as a hole saw.

The body may be substantially tubular, such as in a annular drill bit or hole saw. Alternatively the body may be an elongate strip, such as in a linear edge blade.

Preferably the regions of reduced thickness are equispaced along the cutting surface. Where the body is circular or tubular, the regions of reduced thickness may be circumferentially equispaced.

If desired, at least two sets of regions of reduced thickness are within the cutting surface so as to provide two or more interrupted cutting surfaces.

Where the at least two sets are provided on a common side of the body, each set has regions of different reduced thickness.

Where at least two sets of regions of reduced thickness are provided, the sets may be disposed on opposing sides of the cutting surface, particularly where the cutting accessory is a linear edge blade. The sets may be disposed opposite each other or offset.

Preferably the cutting surface has a thickness in the range of 0.7 to 3 mm.

The regions of reduced thickness preferably have a thickness of between 0.3 to 2.6 mm.

The regions of reduced thickness may be substantially rectangular and may be achieved by milling. The regions may have a flat cross-section by milling using a flat cutter or a dished cross-section by bull nose milling.

Abrasive cutting material is desirably affixed to the cutting surface, so overlying all regions of reduced thickness. The abrasive material is preferably in the form of adhered particles of granular diamond, or tungsten carbide, or carbon boron nitride, or ceramic materials, or combinations of any of these materials.

The cutting accessory as aforesaid is particularly advantageous when used electrical tools operating between 500 to 30,000 rpm such as corded and cordless drills, angle grinders, high speed rotary tools, and portable bandsaws and bandsaws operating between 40 to 7000 sfpm.

The present invention will now be described, by way of example, with reference to the accompanying drawings, in which:
Figure 1 is a perspective view of an annular drill bit in accordance with the invention;
Figure 2 is a perspective view of the annular drill bit with abrasive material applied;
Figure 3 is an end view of the annular drill bit;
Figure 4 is a perspective view of part of the annular drill bit at an enlarged scale;
Figure 5 is a section along V-V at an enlarged scale;
Figure 6 is a section along VI-VI at an enlarged scale;
Figure 7 is a perspective view of a second embodiment of an annular drill bit;
Figure 8 is a perspective view of a third embodiment of an annular drill bit;
Figure 9 is a side view of a linear edge blade in accordance with the invention;
Figures 10(a), (b), (c) and (d) are views from above illustrating different blade configurations; and
Figure 11 is a perspective view illustrating different blade configurations.

### Description

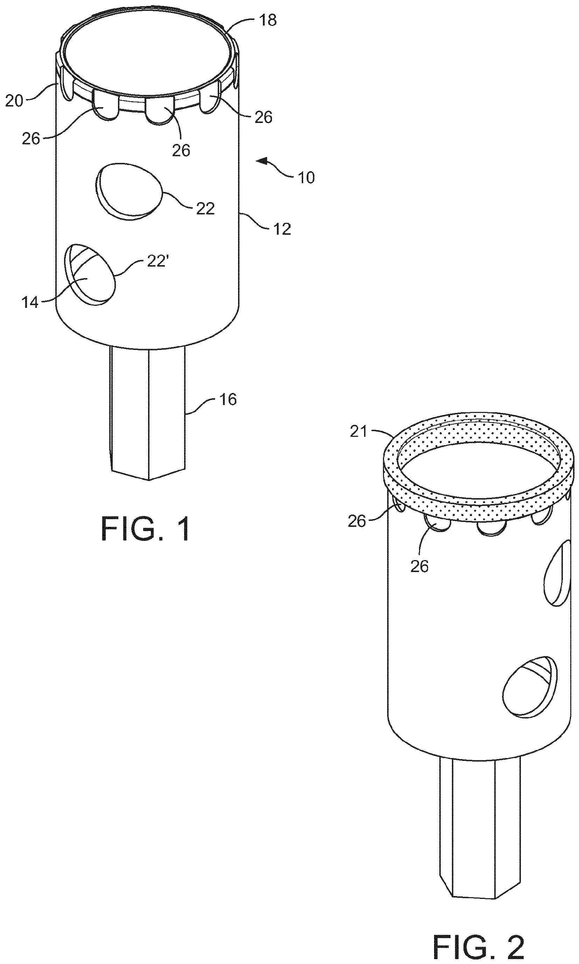

Figure 1 shows a drill bit, or hole saw, 10 comprising an elongate thin-walled tubular body 12 closed at one end by floor 14 and connected to shank 16 for attachment into a drill to enable rotation of the drill bit. Typically, the external diameter of tube 12 will be in the range 5 mm to 114 mm. Annular cutting surface 18 is disposed at the outer end 20 of body 12 distal from shank 16 and generally has abrasive cutting material 21 attached to it, typically in the form of adhered particles of granular diamond or tungsten carbide having particle diameters in the range 125µm to 1000µm, see Figure 2. Optionally, apertures 22, 22' are formed within body 12 and allow debris and fluids to exit tube 12 during drilling, which is particularly useful where a wax plug (not shown) is located within body 12. Rotation of drill bit 10 by a drill or angle grinder connected to shank 16 rotates annular cutting surface 18 so removing circular discs of material from a workpiece such as a tile or work surface.

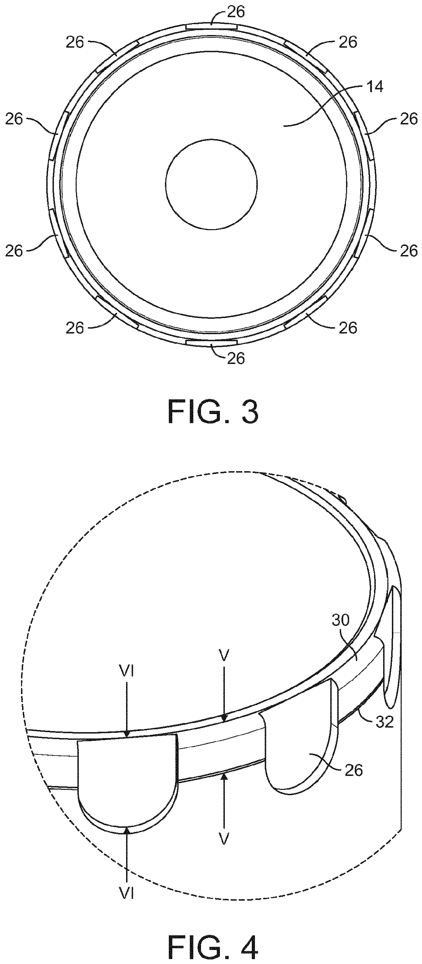

Outer end 20 of tube 12 is formed with a plurality of indented regions 26, see Figure 3 where ten such regularly spaced apart regions are shown, such that annular cutting surface 18 is continuous but varies in wall thickness, having a reduced wall thickness where indented regions 26 are positioned. Indentations 26 are substantially identical and circumferentially equispaced around the edge circumference of tube 12, extending from outer end 20 of tube 12 in an axial direction towards shank 16. Indentations 26 are typically substantially rectangular with a semi-circular lower edge furthest from end 20 and are typically formed by milling outer end 20 using a flat cutter or bull nose cutter.

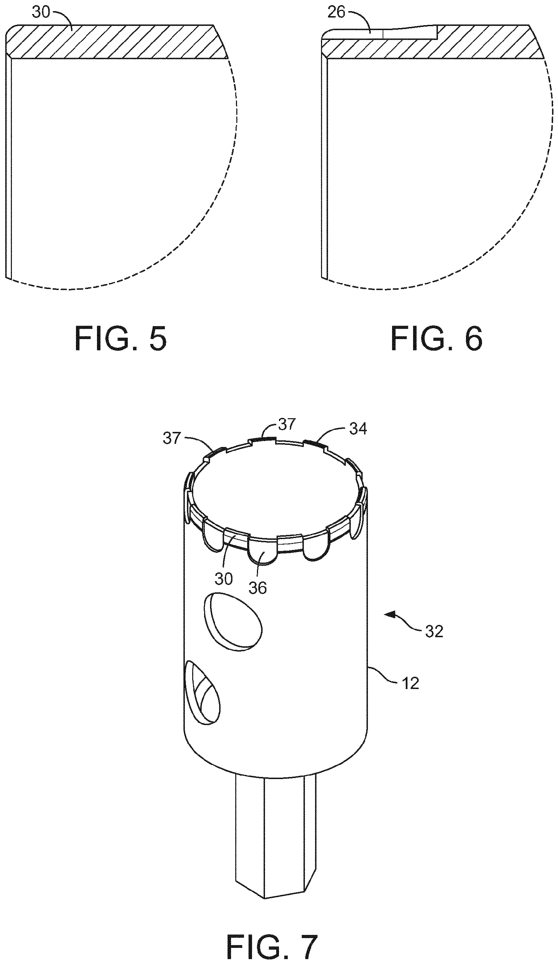

Figure 4 shows a detailed view of region of part of drill bit 10 showing in detail the castellated edge formed by indented regions 26, with Figures 5 and 6 showing sections along the lines V and VI. Indented regions 26 can be seen to have a reduced thickness compared to unmilled regions 30 of body 12, with regions 30 extending laterally beyond regions 26. The wall thickness of body 12 ranges between 0.7 mm to 3.0 mm with the reduced wall thickness in indented regions 26 typically between 0.3 mm to 2.6 mm, prior to coating with abrasive cutting material 21. Line 32 is a guide line used to show where abrasive cutting material 21 is to be applied. Abrasive cutting material 21 undulates around outer end 20 of body 12 due to it overlying regions 26, 30 of different thickness, with abrasive material overlying regions 30 extending laterally beyond abrasive material overlying regions 26.

Separated regions 30 act as an interrupted cutting surface on commencing drilling or cutting as they and their associated abrasive material 21 contact a work surface whilst regions 26 remain inoperative due to their reduced lateral extent. Regions 26 act as a cutting surface after regions 30 have become worn down to the same height as regions 26.

The outer cutting surface formed by regions 30 and the inner cutting surface including regions 26, operative once regions 30 are worn down to the height of regions 26, are operative on a work surface sequentially, with initial drilling or cutting using the outer surface. The two cutting surfaces provided on the continuous surface of body 12 work at different times giving a differential wear rate. By having a continuous surface combined with an interrupted cutting edge, a more robust drilling tool is provided as there are no separate teeth to break and faster cutting speeds are possible as heating of the drill bit will be reduced due to the interruptions in the outer cutting surface. Further the reduced heating reduces wear of the abrasive cutting material 21.

Provision of two or more interrupted cutting surfaces on a hole saw can be achieved by having multiple sets of indentations, each set having a different depth to produce a different wall thickness in body 12.

Figure 7 shows a second embodiment of an annular drill bit 32 before coating with an abrasive material where annular cutting surface 34 varies in height as well as thickness, reduced thickness regions 36 having a reduced height compared to adjoining regions 30 so as to create substantially rectangular teeth 37. Annular cutting surface 34 thus regularly varies in height dependent on the location of regions 36. When teeth 37 are overlain by abrasive cutting material, an undulating or wavelike cutting surface is provided, so that annular cutting surface 34 functions as an interrupted cutting surface when located on a work piece, improving positioning of the drill when perpendicular to the work piece.

The embodiment shown in Figure 7 is particularly of use in industrial core drilling applications where drills are mounted to a stationary power unit to drill through dense concretes.

Figure 8 shows an alternative embodiment of an annular drill bit 38 before coating with abrasive material where annular cutting surface 40 is interrupted with five circumferentially equispaced cut-away portions or gullets 42 regularly disposed between regions 26 of reduced thickness. This increases the cutting pressure on the abrasive material and improves the speed of cutting.

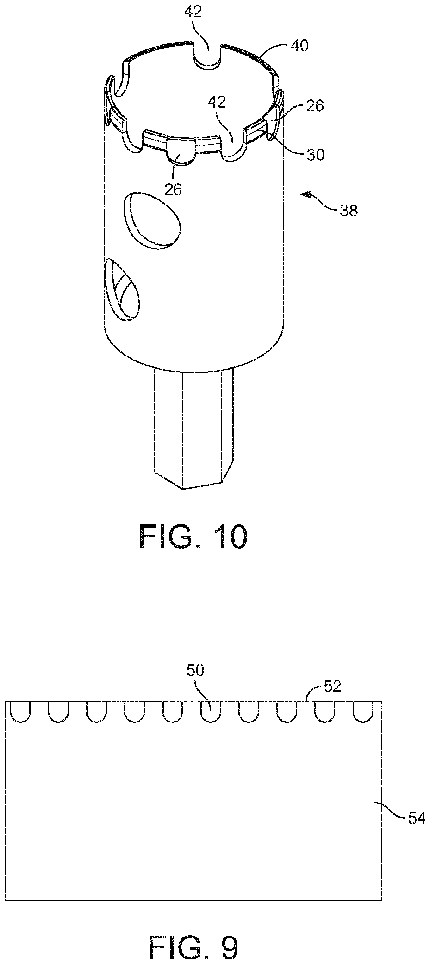

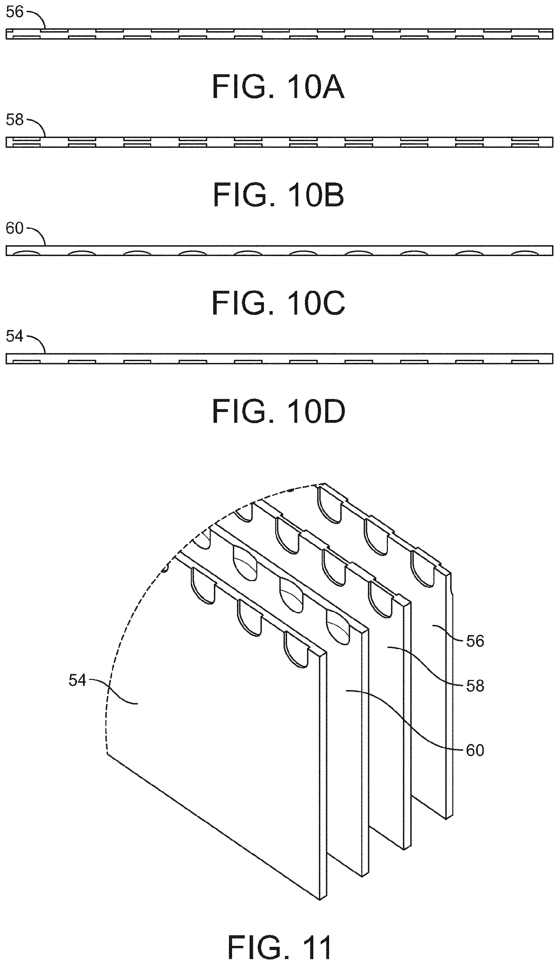

For blades such as a bandsaw blade, jigsaw blade, hacksaw blade, handsaw blades or other types of linear edge blades, Figures 9 to 11 show different types of blade configuration where indented regions 50 can be provided on one or both sides of a continuous cutting surface 52 of blade 54. Typically the linear edge blades will have a thickness in the range 0.7mm to 3.0mm. Where indentations are provided on each side of the blade, these may be in opposing or offset alignment, see blades 56, 58 in Figures 10(a) and 10(b). The indented regions can be substantially rectangular with a semi-circular lower edge as with the hole saw embodiment shown in Figure 1 and can be square milled or round milled using a bull nose cutter to produce a dished surface, see for example blade 60 in Figure 10(c). Where square milling is undertaken, it is easier to provide opposing indentations on opposite sides of the blade, round milling increasing the depth of the indentation.

## Claims

1. A cutting accessory for a power tool comprising a body bearing a cutting surface, wherein the body comprises a plurality of spaced apart regions of reduced thickness to create within the cutting surface at least one interrupted cutting surface overlying a second cutting surface.

2. A cutting accessory according to claim 1, wherein the cutting surface is continuous.

3. A cutting accessory according to claim 1, wherein the cutting surface is an interrupted cutting surface.

4. A cutting accessory according to any of claims 1 to 3, wherein the cutting surface is formed with regions of reduced height.

5. A cutting accessory according to any of claims 1 to 3, wherein the regions of reduced height overly the regions of reduced thicknes.

6. A cutting accessory according to any of claims 1 to 5, wherein the regions of reduced thickness are equispaced along the cutting surface.

7. A cutting accessory according to any of the preceding claims, wherein the body is substantially tubular.

8. A cutting accessory according to any of the preceding claims, wherein the body is a circular disc.

9. A cutting accessory according to claim 7 or claim 8, wherein the regions of reduced thickness are circumferentially equispaced.

10. A cutting accessory according to any of claims 1 to 6, wherein the body is an elongate strip.

11. A cutting accessory according to any of the preceding claims, wherein at least two sets of regions of reduced thickness are within the cutting surface so as to provide two or more interrupted cutting surfaces.

12. A cutting accessory according to claim 10, wherein the sets are disposed on opposing sides of the cutting surface.

13. A cutting accessory according to claim 12, wherein the sets are disposed opposite each other.

14. A cutting accessory according to claim 11, wherein the sets are disposed offset from each other.

15. A cutting accessory according to any of the preceding claims, wherein the cutting surface has a thickness in the range of 0.7 to 3 mm.

16. A cutting accessory according to any of the preceding claims, wherein the regions of reduced thickness preferably have a thickness of between 0.3 to 2.6 mm.

17. A cutting accessory according to any of the preceding claims, wherein the regions of reduced thickness are substantially rectangular.

18. A cutting accessory according to any of the preceding claims, wherein the regions of reduced thickness have a dished cross-section.

19. A cutting accessory according to any of the preceding claims, wherein abrasive cutting material is affixed to the cutting surface.

20. A cutting accessory according to claim 19, wherein the abrasive cutting material is in the form of adhered particles of granular diamond or tungsten carbide.
